# EUROPÄISCHE PATENTANMELDUNG

(11) **EP 3 095 542 A1**
(43) Veröffentlichungstag der Anmeldung: **23.11.2016**
(21) Anmeldenummer: 15405037.1
(22) Anmeldetag: 22.05.2015
(51) Int. Cl.: B23B 47/28, E04F 13/08, E04D 3/36

(54) **SYSTEM UMFASSEND EINE BOHRLEHRE UND EINEN LÄNGSTRÄGER, BOHRLEHRE, LÄNGSTRÄGER, UND VERFAHREN ZUR MONTAGE EINES LÄNGSTRÄGER AN DER AUSSENSEITE EINER ISOLATIONSSCHICHT UNTER VERWENDUNG DES SYSTEMS**

(71) Anmelder: Rogger Fasteners AG, 3257 Grossaffoltern (CH)
(72) Erfinder: Rogger, Adrian, CH-3250 Lyss (CH); Rogger, Marcel, CH-3257 Grossaffoltern (CH)
(74) Vertreter: Kessler, Stephan

(57) **Zusammenfassung**

Ein System umfasst eine Bohrlehre (100) mit mindestens einem Durchgang (130, 131) zur Führung eines Werkzeugs und einen Längsträger (500.1) zur Montage an einer Aussenseite einer Isolationsschicht, wobei die Bohrlehre (100) zur Ausführung einer Bohrung an dem Längsträger (500.1) befestigbar ist und wobei die Bohrlehre (100) über eine erste Haltevorrichtung (110) in einer ersten Richtung am Längsträger (500.1) fixierbar ist. Die Bohrlehre (100) ist über eine zweite Haltevorrichtung (120) in einer zweiten, zur ersten Richtung unterschiedlichen Richtung am Längsträger (500.1) fixierbar.

## Beschreibung

Die Erfindung betrifft ein System umfassend eine Bohrlehre mit mindestens einem Durchgang zur Führung eines Werkzeugs und einen Längsträger zur Montage an einer Aussenseite einer Isolationsschicht, wobei die Bohrlehre zur Ausführung einer Bohrung an dem Längsträger befestigbar ist und wobei die Bohrlehre über eine erste Haltevorrichtung in einer ersten Richtung am Längsträger fixierbar ist. Weiter betrifft die Erfindung eine Bohrlehre und einen Längsträger zur Verwendung in einem solchen System, wie auch ein Verfahren zur Montage des Längsträgers unter Verwendung einer Bohrlehre.

### Stand der Technik

Bohrlehren sind allgemein bekannte Hilfsmittel um beim Bohren die geometrische Position der Bohrung auf einem Werkstück festzulegen. Bohrlehren sind in einer Vielzahl von Ausführungsformen bekannt.

Bohrlehren werden zum Beispiel als Hilfsmittel für die Montage von Fassadenverkleidungen eingesetzt. Nachdem eine Aussenwand mit einer Isolationsschicht isoliert worden ist, wird die Isolationsschicht mit plattenförmigen Elementen versehen. Um diese Elemente befestigen zu können, werden typischerweise nach dem Anbringen der Isolationsschicht Längsträger aus Metall an den Isolationselementen angebracht. Die Längsträger werden zum Beispiel mit Durchsteckdübeln im hinter den Isolationselementen befindlichen Mauerwerk verankert. An den Längsträgern können schliesslich plattenförmige Elemente als Fassadenabschluss oder andere Bauteile befestigt werden.

In einem bekannten System (Rogger Fastening) weist ein solcher Längsträger eine Nutschiene auf, in welche die Bohrlehre einsetzbar ist. Zum Fixieren der Bohrlehre, ist ein T-förmiger Drehriegel vorgesehen. Dieser kann über einen Drehgriff an der Vorderseite der Bohrlehre vom Benutzer derart gedreht werden, dass die Schenkel der T-Form die Nutschiene beidseitig hintergreift.

Die bekannten Bohrlehren haben den Nachteil, dass sie nicht hinreichend präzis und schnell an einem Längsträger positionierbar sind. Daher ist die Montage der Längsträger mit den bekannten Mittel aufwendig, zeitraubend und damit teuer.

### Darstellung der Erfindung

Aufgabe der Erfindung ist es, eine dem eingangs genannten technischen Gebiet zugehörendes System zur Befestigung eines Längsträgers an einer Aussenseite einer Isolationsschicht zu schaffen, welches eine besonders einfache, effiziente und präzise Montage des Längsträgers erlaubt.

Die Lösung der Aufgabe ist durch die Merkmale des Anspruchs 1 definiert. Gemäss der Erfindung ist die Bohrlehre über eine zweite Haltevorrichtung am Längsträger in einer zweiten, zur ersten Richtung unterschiedlichen Richtung fixierbar.

Die zweite Haltevorrichtung, welche die Bohrlehre in einer weiteren Raumrichtung fixieren kann, hat den Vorteil, dass die Bohrlehre gesamthaft besser fixiert werden kann. Durch eine Befestigung in mindestens zwei Raumrichtungen wird erreicht, dass die Bohrlehre in der Verwendung gut kontrollierbar ist, da höchstens bei einer Raumrichtung beachtet werden muss, dass sich die Bohrlehre während des Bohrvorgangs bewegen könnte. Beim Befestigen einer Bohrlehre an einem Längsträger wird die Bohrlehre typischerweise rechtwinklig zu einer Hauptfläche des Längsträgers herangeführt. Um eine Bohrung möglichst präzise ausführen zu können, ist es nun von Vorteil, wenn die Bohrlehre am Längsträger zum Beispiel innerhalb der Hauptfläche des Längsträgers fixiert werden kann. Alternativ kann aber die Bohrlehre auch lediglich in einer einzigen Richtung innerhalb der Ebene der Hauptfläche fixiert sein, vorzugsweise quer zu einer Längsrichtung des Längsträgers, so dass effizient Bohrungen mit Hilfe der Bohrlehre durchgeführt werden können. In letzterem Fall kann nämlich aufgrund der fehlenden Fixierung in Längsrichtung des Längsträgers die Bohrlehre in Längsrichtung verschoben werden. In diesem Fall würde die zweite Haltevorrichtung die Bohrlehre zum Beispiel rechtwinklig zur Hauptfläche des Längsträgers halten, so dass die Bohrlehre sich zwar in Längsrichtung entlang des Längsträgers, nicht aber vom Längsträger weg bewegen kann.

Unter dem Begriff Bohrlehre wird ein Instrument als Hilfsmittel für das Ausführen von Bohrungen verstanden, welches sich im Wesentlichen durch einen Grundkörper auszeichnet, welcher einen Durchgang für einen Bohrer, eine Fräse, ein Nagel oder weitere stiftartige Bearbeitungswerkzeuge aufweist.

Unter dem Längsträger wird ein Profil verstanden, welches zur Montage an einer Aussenseite einer Isolationsschicht geeignet ist. Vorzugsweise handelt es sich beim Längsträger um ein Verbindungsbauteil, über welches ein Fassadenelement mit einer hinter einer Isolationsschicht liegenden Wand verbunden werden kann.

Die erste Haltevorrichtung und die zweite Haltevorrichtung sind derart zu verstehen, dass es sich um zwei unterschiedliche Haltevorrichtungen oder Baugruppen handelt, welche in einer konkreten Verwendung nicht auf dieselben Mittel zurückgreifen. Die beiden Haltevorrichtungen wirken räumlich nicht an derselben Stelle zwischen der Bohrlehre und dem Längsträger.

Bevorzugt ist die Bohrlehre über die erste Haltevorrichtung in einer ersten Ebene fixierbar und die Bohrlehre ist über die zweite Haltevorrichtung in einer ausserhalb der ersten Ebene liegenden, zweiten Richtung fixierbar, um eine räumliche Fixierung der Bohrlehre relativ zum Längsträger zu erreichen.

Damit wird eine Befestigung einer Bohrlehre erreicht, welche eine räumliche Fixierung der Bohrlehre am Längsträger ermöglicht. Die räumliche Fixierung der Bohrlehre hat den Vorteil, dass die Bohrlehre am Längsträger nach der Fixierung nicht weiter gehalten werden muss. Sofern der Längsträger an der Aussenseite der Isolationsschicht bereits vormontiert oder befestigt ist, kann damit der Verwender die Bohrlehre am Längsträger an der gewünschten Stelle fixieren und hat anschliessend beide Hände frei, um die weiteren Arbeitsschritte vorzunehmen. Die weiteren Arbeitsschritte umfassen dabei typischerweise das Bohren der Bohrungen mit Hilfe des Durchgangs in der Bohrlehre. Der Verwender kann somit beide Hände für den Bohrvorgang, insbesondere zum Halten und Betätigen einer Bohrmaschine einsetzen, ohne in die Gefahr zu laufen, dass sich die Bohrlehre verschiebt. Durch die räumliche Fixierung der Bohrlehren am Längsträger kann der Längsträger räumlich beliebig montiert werden, ohne dass sich die Bohrlehre relativ zum Längsträger bewegen kann. Der Längsträger kann damit horizontal, vertikal, diagonal oder auch überhängend montiert werden, ohne dass sich die Bohrlehre verschiebt.

Bevorzugt sind die erste oder die zweite Haltevorrichtung, besonders bevorzugt die erste und die zweite Haltevorrichtung als formschlüssige Haltevorrichtungen ausgebildet. Damit wird eine räumliche Fixierung der Bohrlehre am Längsträger erreicht, welche weitgehend kraftlos erfolgen kann, zum Beispiel durch Einschnappen, durch Anschläge etc. (siehe unten). Die beiden Haltevorrichtungen können zusätzlich über eine kraftschlüssige Haltevorrichtung am Längsträger befestigbar sein.

In Varianten kann auch die erste oder die zweite oder auch beide, die erste und die zweite Haltevorrichtung als kraftschlüssige Haltevorrichtungen ausgebildet sein.

Vorzugsweise umfasst die erste Haltevorrichtung ein erstes Schliesselement zum Hintergreifen eines ersten Bereichs des Längsträgers, womit die Bohrlehre in der ersten Ebene fixierbar ist und wobei die erste Ebene rechtwinklig zu einer Hauptfläche des Längsträgers liegt. Besonders bevorzugt handelt es sich bei der ersten Haltevorrichtung um eine formschlüssige Haltevorrichtung, da damit kraftunabhängig eine gute Fixierung der Bohrlehre am Längsträger erreicht wird. Der erste Bereich kann dabei weitgehend beliebig ausgebildet sein, so kann der erste Bereich zum Beispiel als Öffnung ausgebildet sein, durch welche das erste Schliesselement hindurchgreift und aufspreizt. Dem Fachmann sind auch andere mögliche Ausbildungen eines ersten Bereichs bekannt, welche durch ein Schliesselement hintergriffen werden können.

Alternativ kann die erste Haltevorrichtung auch ohne erstes Schliesselement, welches einen Bereich eines Längsträgers hintergreift, auskommen. Falls der Längsträger ein ferromagnetisches Material umfasst, kann die Bohrlehre einen Magneten umfassen, welcher die erste Haltevorrichtung bildet. Weiter kann die erste Haltevorrichtung auch als Schienenführung ausgebildet sein, welche die Bohrlehre in einer Längsrichtung des Längsträgers führt.

Vorzugsweise ist aber der erste Bereich des Längsträgers als Nutschiene ausgebildet. Damit wird auf besonders einfache Weise ein Formschluss zwischen der Bohrlehre und der Nutschiene erreicht. Unter einer Nutschiene wird eine Schiene mit einer Nut verstanden, welche beidseitig zur Nut hinterschnitten ist, wobei sich der Begriff "hinterschnitten" nicht auf die Herstellungsart der Nutschiene zu interpretieren ist. Ein weiterer Vorteil liegt darin, dass eine Nutschiene besonders einfach und kostengünstig an einem Längsträger ausgebildet werden kann. Schliesslich könnte die Nutschiene nach den Bohrungen mit Hilfe der Bohrlehre auch eine weitere Funktion am Längsträger übernehmen, zum Beispiel könnte über die Nutschiene ein Fassadenelement unter anderem formschlüssig montiert werden. In einer besonders bevorzugten Variante handelt es sich bei der Nutschiene um eine sogenannte T-Nutschiene.

In Varianten kann statt der Nutschiene auch lediglich eine überstehende Kante vorgesehen sein, welche hintergriffen werden kann. Dem Fachmann sind weitere Varianten bekannt.

Bevorzugt ist das erste Schliesselement von einer Schliessstellung, in welcher das Schliesselement den ersten Bereich hintergreift, in eine Offenstellung überführbar, in welcher das Schliesselement den ersten Bereich nicht hintergreift. Damit wird eine lösbare erste Haltevorrichtung erreicht. Nach dem einsetzen und fixieren der Bohrlehre mittels der ersten Haltevorrichtung kann Letztere kontrolliert wieder gelöst werden, um die Bohrlehre nach erfolgter Bohrung gleich an Ort und Stelle in einfacher Weise wieder zu entnehmen. Damit können mit einer Bohrlehre in effizienter Weise mehrere Längsträger nacheinander montiert werden.

Alternativ kann die erste Haltevorrichtung auch nicht lösbar ausgebildet sein. In dem Fall kann die erste Haltevorrichtung zum Beispiel derart ausgebildet sein, dass sie seitlich, das heisst in einem offenen Endbereich der Nutschiene, in die Nutschiene ein- und ausgefahren werden kann.

Vorzugsweise ist das erste Schliesselement entgegen einer Rückstellkraft von der Schliessstellung in die Offenstellung überführbar. Damit wird eine Bohrlehre geschaffen, welche über die erste Haltevorrichtung besonders einfach am Längsträger befestigt werden kann. Die Bohrlehre kann damit über einen Schnappverschluss verfügen, welcher beim Einführen in die Nutschiene des Längsträgers selbsttätig einschnappt und so die Bohrlehre am Längsträger fixiert.

In Varianten kann auf die Rückstellkraft auch verzichtet werden. Die Schliessposition kann auch durch einen Reibschluss innerhalb der Bohrlehre oder auch zwischen dem Schliesselement und der Nutschiene erreicht werden.

Vorzugsweise umfasst die erste Haltevorrichtung ein zweites Schliesselement, welches entgegen einer Rückstellkraft von einer Schliessstellung in eine Offenstellung überführbar ist. Die Ausbildung zweier Schliesselemente an der ersten Haltevorrichtung der Bohrlehre ist von besonderem Vorteil, da damit die Bohrlehre ohne Schwenkbewegung in die Nutschiene eingeführt werden kann. Die beiden Schliesselemente können dabei identisch, spiegelsymmetrisch oder auch anderweitig unterschiedlich ausgebildet sein. Das zweite Schliesselement kann prinzipiell auch einstückig mit dem ersten Schliesselement verbunden sein. In einem solchen Fall können die beiden Schliesselemente zum Beispiel auf einer gemeinsamen Achse rotierbar gelagert sein, so dass diese bei einer Rotationsbewegung in Eingriff mit den Hinterschnitten der Nutschiene kommen.

In Varianten kann beim zweiten Schliesselement auch auf die Rückstellkraft verzichtet werden. In dem Fall würde die Bohrlehre über eine Schwenkbewegung in die Nutschiene eingeführt werden, wobei zuerst das fixe Schliesselement in den ersten Hinterschnitt der Nutschiene eingefahren wird, um anschliessend die Bohrlehre über eine zur Längsrichtung des Längsträgers parallelen Schwenkachse mit dem federnden Schliesselement in den zweiten Hinterschnitt einzuschwenken.

Bevorzugt weist die Bohrlehre einen Grundkörper mit zwei gegenüberliegenden Betätigungselementen zum Betätigen des ersten und des zweiten Schliesselements auf. Besonders bevorzugt handelt es sich dabei um manuell betätigbare Betätigungselemente. Damit kann die Bohrlehre hinsichtlich der ersten Haltevorrichtung nach der Befestigung am Längsträger besonders einfach wieder entfernt respektive davon gelöst werden. Dadurch, dass die Betätigungselemente gegenüberliegend ausgebildet sind, können diese besonders komfortabel bedient werden, indem die Betätigungselemente zum Beispiel mit Daumen und Zeigfinger einer Hand ergriffen werden. Dies ist sowohl beim Einsetzen der Bohrlehre in den Längsträger als auch bei der Entnahme der Bohrlehre aus dem Längsträger von Vorteil. Dem Fachmann ist aber klar, dass prinzipiell auch beide Schliesselemente durch genau ein Betätigungselement erreicht werden kann, dem Fachmann sind dazu hinreichend Möglichkeiten bekannt.

In Varianten kann auf die Betätigungselemente auch verzichtet werden. In diesem Fall könnte eine Lösung der Verrastung des Schliesselements auch über Gleitebenen, ausgebildet als bezüglich der Bewegungsrichtung rampenartig abgeschrägte Kanten am Schliesselement wie auch im Hinterschnitt, erreicht werden. Das Betätigungselement kann auch nur für ein Schliesselement vorgesehen sein. Schliesslich müssen die beiden Betätigungselemente auch nicht zwingend gegenüberliegend angeordnet sein.

Vorzugsweise umfasst die zweite Haltevorrichtung einen Vorsprung an der Bohrlehre und eine Vertiefung am Längsträger, wobei bei in den Längsträger eingerasteter Bohrlehre der Vorsprung in die Vertiefung eingreift und so die eingerastete Bohrlehre in der zweiten, zur ersten Richtung unterschiedlicher Richtung, fixiert. Diese Ausbildung der zweiten Haltevorrichtung zeichnet sich durch die konstruktiv einfache Bauweise aus. Der Vorsprung kann weitgehend beliebig an der Bohrlehre angeordnet sein, oder sogar einstückig mit dieser verbunden sein. Ebenso kann die Form des Vorsprungs weitgehend beliebig gewählt werden, wobei lediglich darauf geachtet werden muss, dass die Vertiefung zum Vorsprung derart korrespondiert, dass der Vorsprung in die Vertiefung eingreifen kann. In einer besonders bevorzugten Ausführungsform ist der Vorsprung statisch, das heisst nicht beweglich ausgebildet. In Varianten kann der Vorsprung aber auch als federndes Element vorgesehen sein, welches zum Beispiel in die Vertiefung einrasten kann.

Insbesondere die Kombination zwischen der ersten Haltevorrichtung, welche über die Betätigungselemente bedienbar ist und der zweiten Haltevorrichtung, welche als Formschluss ausgebildet ist, welcher nicht betätigt werden muss, wird eine besonders einfache an einem Längsträger fixierbare Bohrlehre geschaffen. Eine effiziente Montage der Längsträger wird auch dadurch erreicht, dass die Bohrlehre einfach mit einer Hand am Längsträger fixiert werden kann. Damit muss der Anwender nicht zwingend zwischen zwei Bohrungen die Bohrmaschine ablegen, sondern mit der einen Hand die Bohrmaschine halten, während er mit der anderen Hand die Bohrlehre positioniert und fixiert.

Ein besonderer Vorteil liegt zudem darin, dass mit der Kombination der beiden Haltevorrichtungen die Bohrlehre räumlich fixiert ist, so dass der Bohrvorgang mit beiden Händen ausgeführt werden kann.

In Varianten kann die zweite Haltevorrichtung auch anderweitig ausgebildet sein. Zum Beispiel kann diese einen Magneten umfassen, welcher mit einem ferromagnetischen Längsträger zusammenwirkt.

Vorzugsweise weist die Bohrlehre einen Grundkörper mit mindestens einem Durchgang zur Führung eines Werkzeugs auf, wobei der Grundkörper weiter einen Zapfen zum Einführen in eine Positionieröffnung eines Längsträgers umfasst.

Vorzugsweise sind damit der Vorsprung der Bohrlehre als Zapfen und die Vertiefung als Positionieröffnung ausgebildet. Damit wird eine besonders einfach ausgebildete zweite Haltevorrichtung geschaffen. Insbesondere kann die Positionieröffnung als Bohrung oder Stanzung ausgebildet sein, welche äusserst kostengünstig herstellbar sind. Die Positionieröffnung und der Zapfen ermöglichen eine Fixierung der Bohrlehre in der Ebene des Längsträgers, sofern der Zapfen in der Positionieröffnung kein Spiel aufweist. Da aber in einer bevorzugten Ausführungsform die Bohrlehre schienenartig in der T-Nut des Längsträgers geführt ist, reicht es aus, wenn der Zapfen in der Positionieröffnung lediglich in einer Längsrichtung des Längsträgers kein Spiel aufweist. Somit kann die Positionieröffnung zum Beispiel oval, mit dem längeren Durchmesser quer zur Längsrichtung des Längsträgers ausgebildet sein. Die ovale Form hat den Vorteil, dass mit dem Zapfen, welcher bevorzugt auf der Rückseite der Bohrlehre angeordnet ist, die Positionieröffnung einfacher getroffen werden kann, ohne die Präzision des Systems zu beeinträchtigen.

In Varianten kann die Vertiefung auch als Einschnitt ausgebildet sein, welcher zum Beispiel an einem überstehenden Rand der Nutschiene eingeschnitten sein kann. Weiter kann der Zapfen auch am Längsträger und die Positionieröffnung an der Bohrlehre angeordnet sein.

In einer besonders bevorzugten Variante ist der Zapfen an einer Unterseite der Bohrlehre angeordnet und entsprechend ist die Positionieröffnung im Nutschienenbett eingelassen.

Bei einer Kombination der beiden Haltevorrichtungen kann die Bohrlehre mit Daumen und Zeigefinger an den beiden gegenüberliegenden Betätigungselementen ergriffen und betätigt werden, so dass die Schliesselemente in Offenstellung überführt sind. Anschliessend wird die Bohrlehre in den Längsträger geführt, wobei der Zapfen in die Positionieröffnung geführt wird. Anschliessend werden die Betätigungselemente losgelassen, womit die Schliesselemente die Vorsprünge der Nutschiene hintergreifen, so dass die Bohrlehre räumlich am Längsträger fixiert ist.

Der Grundkörper der Bohrlehre weist vorzugsweise einen zweiten Durchgang auf, wobei der erste Durchgang und der zweite Durchgang einen spitzen Zwischenwinkel einnehmen. Damit können mit einer einzigen Bohrlehre wahlweise unterschiedlich ausgerichtete Bohrungen ausgeführt werden. Insbesondere können auch mehr als zwei Durchgänge vorgesehen sein.

In Varianten kann auch nur ein einziger Durchgang vorgesehen sein.

Vorzugsweise liegt der Zwischenwinkel in einem Bereich von 5° bis 60°, besonders vorzugsweise in einem Bereich von 10° bis 40°. Weiter ist bevorzugt ein erster der beiden Durchgänge rechtwinklig zur Hauptfläche des Längsträgers ausgerichtet, so dass Bohrungen rechtwinklig zur Fassadenoberfläche respektive Isolationsoberfläche ausgeführt werden können. Der zum senkrechten Durchgang verschwenkte Durchgang kann eingesetzt werden, um einen Längsträger schräg an einer Mauer festzuschrauben, so dass Querkräfte besser aufgenommen werden können - erhöhte Querkräfte können insbesondere dann auftreten, wenn der Abstand zwischen Mauer und Längsträger gross ist und wenn durch die Isolationsschicht lediglich eine geringe Stützung des Längsträgers erreicht wird.

In Varianten kann ein Zwischenwinkel auch in einem anderen Bereich liegen.

Der Längsträger umfasst damit eine Nutschiene zur Aufnahme einer Bohrlehre und eine erste Bohröffnung für das Durchführen eines Werkzeugs, insbesondere eines Bohrers, sowie eine Positionieröffnung zur Aufnahme eines Zapfens einer Bohrlehre.

Die Bohröffnung und die Positionieröffnung in der Nutschiene sind vorzugsweise bezüglich einer Längsrichtung des Längsträgers hintereinander angeordnet.

Auf die Positionieröffnungen kann auch verzichtet werden. Die Positionieröffnungen und die Bohröffnungen können ihre Mittelpunkte auch auf zueinander beabstandeten Parallelen aufweisen. Damit kann verhindert werden, dass der Zapfen versehentlich in einer Bohröffnung zu liegen kommt.

Vorzugsweise weist der Längsträger in der Nutschiene in der Längsrichtung hintereinander zwei Bohröffnungen zum Durchführen eines Werkzeugs auf, welche jeweils beidseitig in Längsrichtung zu einer Positionieröffnung zur Aufnahme eines Zapfens einer Bohrlehre benachbart sind. Damit wird zu jeder Bohröffnung eine Positionieröffnung zugeordnet.

In Varianten können auch jeweils im Abstand nur eine Positionieröffnung einer Bohröffnung zugeordnet werden.

In einem Verfahren zur Montage eines Längsträgers an der Aussenseite einer Isolationsschicht, werden die folgenden Schritte ausgeführt:
1. Provisorische Befestigung des Längsträgers an der Aussenseite der Isolationsschicht;
2. Formschlüssiges Befestigen der Bohrlehre am Längsträger;
3. Bohren einer Bohrung mithilfe der Bohrlehre.

Vorzugsweise wird für die provisorische Befestigung ein stiftartiges Befestigungsmittel mit dem Längsträger verbunden, über welches der Längsträger an der Aussenseite der Isolationsschicht provisorisch befestigt wird. Damit kann der Längsträger in einfacher Weise durch eine einzige Person an der Aussenseite der Isolationsschicht sowohl exakt positioniert als auch vorfixiert werden. Besonders bevorzugt handelt es sich bei den stiftartigen Befestigungsmittel um Befestigungsmittel in der Art eines Nagels, insbesondere um einen Kunststoffnagel mit einem Kopfteil, welcher mit dem Längsträger verbindbar ist.

In Varianten kann auf die stiftartigen Befestigungsmittel auch verzichtet werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Schrägansicht einer Bohrlehre einer ersten Ausführungsform mit einer nach oben gerichteten Auflagefläche (kopfüber);
- Fig. 2: eine Schnittdarstellung quer zu einer Längsrichtung der Bohrlehre gemäss Figur 1;
- Fig. 3: eine schematische Draufsicht auf eine Bohrlehre gemäss Figur 1;
- Fig. 4: eine Bohrlehre einer zweiten Ausführungsform in einer Schnittdarstellung in Längsrichtung;
- Fig. 5a: eine schematische Frontansicht der Bohrlehre der zweiten Ausführungsform, fixiert auf einem Längsträger;
- Fig. 5b: eine schematische Draufsicht auf die Bohrlehre und den Längsträger gemäss Figur 5;
- Fig. 6a: eine schematische Darstellung einer Seitenansicht eines mit einem Längsträger verbundenen Nagels;
- Fig. 6b: eine schematische Querschnittsdarstellung des Längsträgers in einer Längsträgerlängsrichtung der Figur 6a;
- Fig. 6c: eine Detailansicht des mittleren Bereichs des Längsträgers aus Figur 6b;
- Fig. 6d: eine schematische Draufsicht des Nagels und des Längsträgers aus Figur 6a und Figur 6b;
- Fig. 7a: eine schematische Darstellung eines befestigten Längsträgers an einer Aussenmauer;
- Fig. 7b: eine schematische Darstellung eines Schnitts quer zu Längsrichtung gemäss Figur 7a;
- Fig. 8a: eine schematische Querschnittsdarstellung zur Längsträgerlängsrichtung einer weiteren Ausführungsvariante eines Längsträgers;
- Fig. 8b: eine schematische Darstellung einer Draufsicht des Längsträgers aus Figur 8a;
- Fig. 9a: eine schematische Querschnittsdarstellung zur Längsträgerlängsrichtung einer weiteren Ausführungsvariante eines Längsträgers;
- Fig. 9b: eine schematische Darstellung einer Draufsicht des Längsträgers aus Figur 9a;
- Fig. 10a: eine schematische Querschnittsdarstellung zur Längsträgerlängsrichtung einer weiteren Ausführungsvariante eines Längsträgers;
- Fig. 10b: eine schematische Darstellung einer Draufsicht des Längsträgers aus Figur 10a;
- Fig. 11a: eine schematische Querschnittsdarstellung zur Längsträgerlängsrichtung einer weiteren Ausführungsvariante eines Längsträgers;
- Fig. 11b: eine schematische Darstellung einer Draufsicht des Längsträgers aus Figur 1 1 a; und
- Fig. 12: eine schematische Darstellung einer Draufsicht einer weiteren Ausführungsvariante eines Längsträgers.

Grundsätzlich sind in den Figuren gleiche Teile mit gleichen Bezugszeichen versehen.

### Wege zur Ausführung der Erfindung

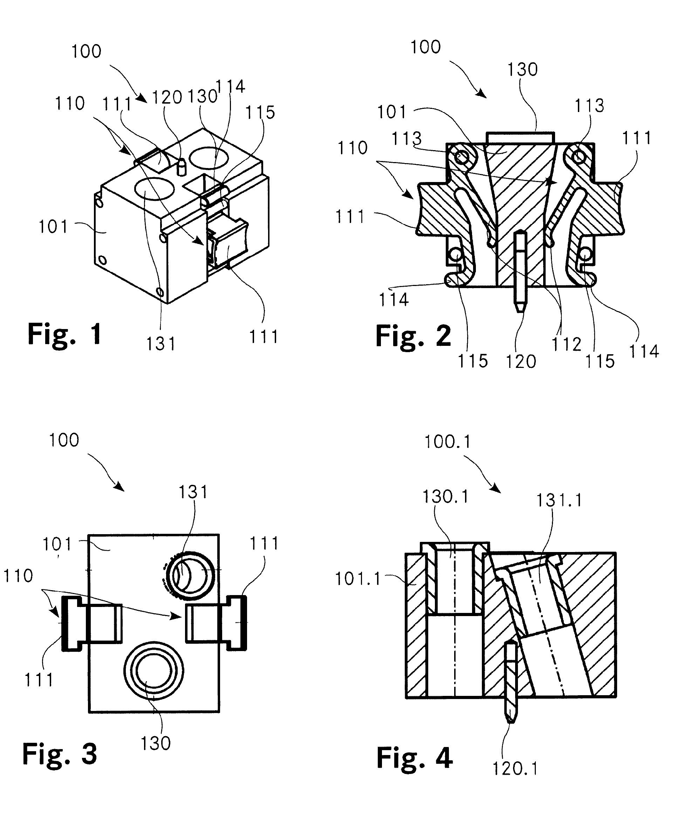

Die Figur 1 zeigt eine schematische Schrägansicht einer Bohrlehre 100 einer ersten Ausführungsform mit einer nach oben gerichteten Auflagefläche (kopfüber). Die Bohrlehre 100 umfasst einen im Wesentlichen quaderförmigen Grundkörper 101, welcher entlang zweier benachbarten und in Längsrichtung verlaufenden Kanten einen Absatz aufweist, über welche der Grundkörper 101 in einer entsprechenden T-Nut in der Art einer Schienenführung geführt werden kann. Der Grundkörper 101 umfasst seitlich zwei sich gegenüberliegende Schliessvorrichtungen 110, von welchen in der Figur 1 die Betätigungselemente 111 und die Nase 114 ersichtlich sind. Weiter weist der Grundkörper 101 zwei Durchgänge 130, 131 zur Führung eines Bohrers auf. Zwischen den beiden Durchgängen 130, 131 ist ein Zapfen 120 ersichtlich, welcher als Positionierhilfe dient.

Die Figur 2 zeigt eine Schnittdarstellung quer zu einer Längsrichtung der Bohrlehre 100 gemäss Figur 1. Die Bohrlehre 100 ist in dieser Darstellung mit der Auflagefläche nach unten dargestellt (nicht kopfüber). In dieser Darstellung ist zu erkennen, dass der Zapfen 120 vorliegend nicht einstückig mit dem Grundkörper 101 ausgebildet ist, sondern in der Form eines Stifts in einer Bohrung aufgenommen ist. Die Schliessvorrichtungen 110 sind jeweils über eine in Längsrichtung gerichtete Schwenkachse 113 am Grundkörper 101 gelagert. Mittig stützt eine Feder 112 der Schliessvorrichtung derart am Grundkörper 101 ab, dass eine Nase 114 der Schliessvorrichtung nach aussen gegen einen Anschlag 115 in eine Schliessstellung gepresst wird. Von aussen sind die Schliessvorrichtungen 110 über ein Betätigungselement 111 gegen die Federkraft so betätigbar, dass die Nase 114 von der Schliessstellung, in welcher die Nase 114 im Absatz liegt, in eine Offenstellung, in welcher die Nase 114 den Absatz freigibt, überführbar ist.

Die Figur 3 zeigt eine schematische Draufsicht auf eine Bohrlehre 100 gemäss Figur 1. Zusätzlich zu den vorangehenden Figuren ist ersichtlich, dass die Eintrittsöffnungen der Durchgänge 130, 131 zueinander versetzt sind. Der Durchgang 130 ist rechtwinklig zur Längsrichtung ausgerichtet und der Durchgang 131 weist zum Durchgang 130 einen Winkel von 15° auf. In der ersten Ausführungsform der Bohrlehre ist der Durchgang 131 um einen Winkel von 15° quer zur Längsrichtung ausgelenkt. Damit können schräge Bohrungen quer zur Längsrichtung des Längsträgers ausgeführt werden. Diese Bohrlehre wird vorzugsweise für die horizontale Montage von Längsträgern verwendet.

Die Figur 4 zeigt eine Bohrlehre 100.1 einer zweiten Ausführungsform in einer Schnittdarstellung in Längsrichtung. Die wesentlichen Teile stimmen mit der ersten Ausführungsform überein, bei den Bezugszeichen ist jeweils ".1" angeführt. Der einzige Unterschied zur ersten Ausführungsform liegt darin, dass die Bohrung 131.1 nicht quer zur Längsrichtung sondern in Längsrichtung um 15° verschwenkt ist. Diese Ausführungsform ist insbesondere für die Montage von vertikalen Längsträgern vorgesehen.

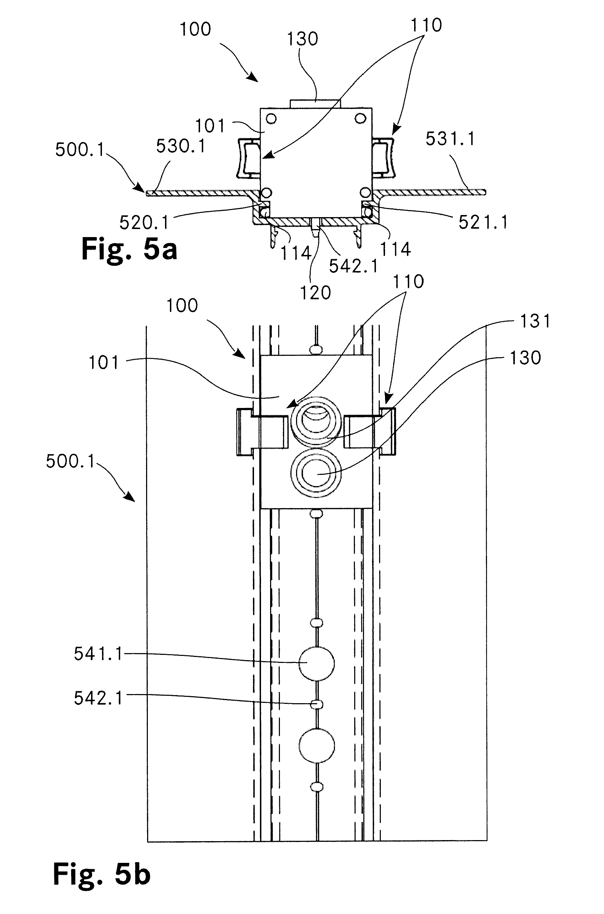

Die Figur 5a zeigt eine schematische Frontansicht der Bohrlehre 100 der zweiten Ausführungsform, fixiert auf einem Längsträger 500.1. Die Nase 114 hintergreift dabei die T-Nut des Längsträgers 500.1 (letzter wird unten näher beschrieben) respektive den Hohlraum, der durch die Stege 520.1, 521.1 gebildet wird. Damit ist die Bohrlehre 100 in Richtung der senkrecht zur Hauptfläche stehenden Achse formschlüssig im Längsträger 500.1 gehalten. Zusätzlich greift ein Stift 120 der Bohrlehre 100 in die Ausnehmung 542.1. Dadurch ist die Bohrlehre 100 auch in Längsrichtung des Längsträgers 500.1 formschlüssig gehalten.

Figur 5b zeigt eine Draufsicht der montierten Bohrlehre 100. Die Bohrlehre 100 umfasst weiter zwei seitlich gegenüberliegende Betätigungselemente 110, womit die Nasen 114 entgegen der Federkraft in eine Offenstellung überführt werden können.

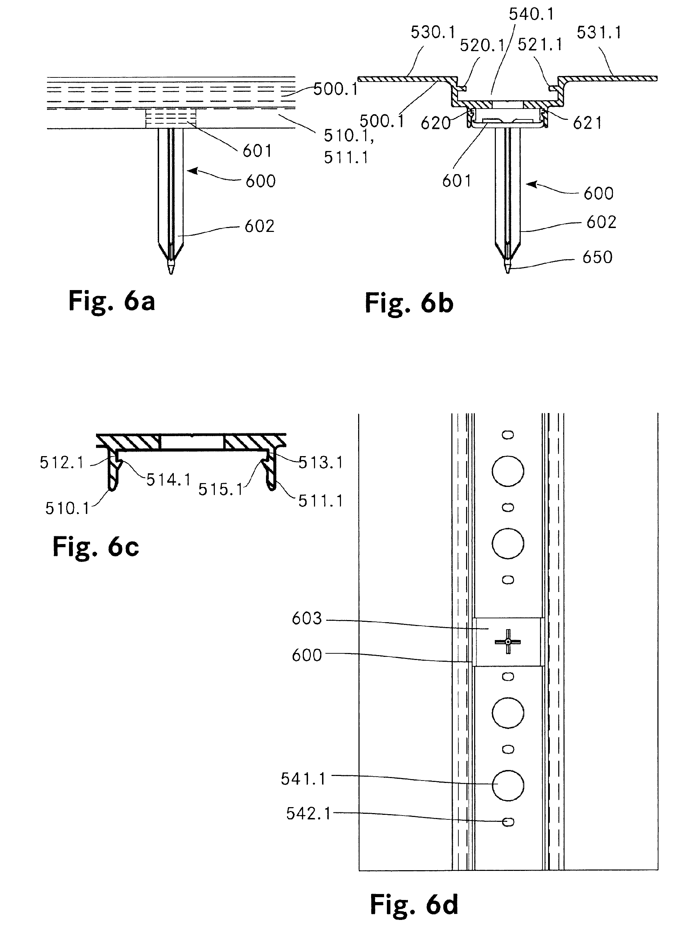

Figur 6a zeigt eine Seitenansicht des Nagels 600 und des Längsträgers 500.1, wobei der Nagel 600 mit dem Kopfteil 601 auf der Seite der Hauptfläche mit dem Längsträger 500.1 verbunden ist und der Stiftteil 602 in einem rechten Winkel vom Längsträger 500.1 absteht. Die Hauptfläche des Längsträgers 500.1 ist die Seite, die im befestigen Zustand des Längsträgers der Isolationsschicht zugewandt ist oder anders ausgedrückt ist es die Seite, mit der der Längsträger 500.1 auf der Isolation aufliegt. Figur 6b zeigt einen Querschnitt des Längsträgers 500.1 mit einem befestigen Nagel 600. Der Längsträger 500.1 weist im Querschnitt eine U-förmige Gestalt mit einer Öffnung 540.1 auf mit beidseitig an die U-Form anschliessende Ausdehnungen 530.1, 531.1 in Querrichtung, dargestellt in Figur 6b. Die Höhe der U-Form im Querschnitt entspricht etwa einem Drittel der Breite der U-Form. Die Ausdehnungen 530.1, 531.1 sind an einem oberen Ende und auf einer Aussenseite der Schenkel der U-Form angeordnet und stehen rechtwinklig von den Schenkeln der U-Form ab. Die Länge der Ausdehnungen 530.1, 531.1 in Querrichtung des Längsträgers entspricht etwa der Breite der U-Form. Im montierten Zustand weist die Öffnung 540.1 der U-Form gegen aussen, von der Isolationsschicht weg. An den Seitenwänden der U-Form befinden sich zwei jeweils zur anderen Seitenwand zeigende Stege 520.1, 521.1. Die Stege 520.1, 521.1 befinden sich auf einer Innenseite der Schenkel der U-Form und stehen dabei rechtwinklig von den Schenkeln ab. Die Stege 520.1, 521.1 sind etwa in der Mitte der Schenkellänge der U-Form angeordnet. Die Stege 520.1, 521.1 dienen dazu, ein Montagewerkzeug wie beispielsweise eine Bohrlehre aufzunehmen. Das Montagewerkzeug wird durch die Stege 520.1, 521.1 in einer rechtwinklig zur Hauptfläche stehenden Achse formschlüssig im Längsträger 500.1 gehalten.

Der Längsträger 500.1 weist auf der der Isolationsschicht zugewandten Seite, also auf der Seite der Hauptfläche zwei über die gesamte Länge des Längsträgers verlaufende Raststege 510.1, 511.1 auf, dargestellt in Figur 6c. Diese Ansicht ist eine Vergrösserung des Bereichs mit den Raststegen 510.1, 511.1 aus Figur 6b jedoch ohne montierten Nagel 600. Die Raststege 510.1, 511.1 sind in Querrichtung gesehen in einem Abstand zueinander angeordnet und stehen rechtwinklig von einem Böden der U-Form ab. Der Abstand zwischen den Raststegen 510.1, 511.1 in Querrichtung ist etwas kleiner als die Breite der U-Form. Die Höhe der Stege 510.1, 511.1, also der Abstand vom Boden der U-Form bis zum Ende der Raststege 510.1, 511.1 entspricht in etwa der Höhe der Schenkel 610, 611 des Kopfteils 601. Jeder Raststeg 510.1, 511.1 weist eine auf einer Innenseite des Steges angeordnete dem anderen Steg zugewandte Nut 512.1, 513.1 auf. Diese Nuten 512.1, 513.1 verlaufen über die ganze Länge der Stege 510.1, 511.1. Die Nuten 512.1, 513.1 befinden sich nahe dem Boden der U-Form, das heisst sie sind im Bereich angeordnet, wo die Raststege 510.1, 511.1 mit dem Boden der U-Form verbunden sind. Eine Seitenwand der Nuten 512.1, 513.1 bildet der Boden der U-Form, die gegenüberliegenden Seitenwände sind als nasenförmige Kanten 514.1, 515.1 ausgebildet. Die nasenförmigen Kanten 514.1, 515.1 haben auf der vom Längsträger weg zeigenden Seite eine rampenförmige Form.

Wird der Nagel 600 mit dem Kopfteil 601 zwischen die Raststege 510.1, 511.1 geführt, biegen die hervorstehenden Kanten 514.1, 515.1 der Nuten 512.1, 513.1 zuerst die Schenkel 610, 611 gegeneinander zu. Wenn das Kopfteil 601 weiter zwischen die Raststege 510.1, 511.1 geschoben wird, rasten die Rasthaken 620, 621 an den Schenkeln 610, 611 in die Nuten 512.1, 513.1 ein, ersichtlich in Figur 6b. Das heisst, die Schenkel 610, 611 federn durch die Elastizität des Materials zurück in die Grundstellung und die Rasthaken 620, 621 liegt in den Nuten 512.1, 513.1. Der Nagel 600 befindet sich dann in der befestigten Position. Das bedeutet, der Kopfteil 601 des Nagels 600 ist nun durch Formschluss in den Nuten 512.1, 513.1 des Längsträgers 500.1 gehalten. Bei einer in Längsrichtung des Stiftteils 602 vom Längsträger 500.1 wegzeigenden wirkenden Kraft stehen die Rasthaken 620, 621 an Seitenwänden der Nuten 512.1, 513.1 an und verhindern somit eine Bewegung des Nagels 600 in Kraftrichtung.

In einer anderen nicht gezeigten Ausführung des Längsträgers 500.1 wird der Nagel 600 von der der Hauptfläche gegenüberliegenden Seite des Längsträgers 500.1 montiert. Der Nagel 600 wird in diesem Fall mit der Spitze 650 voran von der Öffnung 540.1 der U-Form durch ein Loch im Längsträger 500.1 geführt bis die Rasthaken 620, 621 des Kopfteils 601 in die Nuten 520.1, 521.1 einrasten. Der Kopfteil 601 des Nagels 600 liegt in diesem Fall auf der der Hauptfläche gegenüberliegenden Seite des Längsträgers 500.1. Dadurch kann der Nagel 600 beispielsweise an einen bereits auf der Isolationsschicht aufliegenden Längsträger 500.1 montiert werden.

In Figur 6d ist der Längsträger 500.1 mit dem montierten Nagel 600 in der Draufsicht gezeigt. Ersichtlich ist zudem die rechteckförmige Kopfplatte 603 des Nagels 600. Im Längsträger 500.1 befinden sich in der Mitte in Bezug auf die Querrichtung im Boden der U-Form grosse Löcher 541.1 und kleine ovale Ausnehmungen 542.1. In Längsrichtung des Längsträgers 500.1 gesehen sind ovale Ausnehmungen 542.1 und grosse Löcher 541.1 immer abwechselnd angeordnet, wobei nach drei Ausnehmungen und zwei Löchern 541.1 immer eine Lücke vorhanden ist.

Durch die grossen Löcher 541.1 erfolgt die Bohrung, durch die Isolationsschicht in die Gebäudewand. Die kleinen ovalen Löcher 541.1 dienen dazu, eine Bohrlehre in Längsrichtung formschlüssig zu halten.

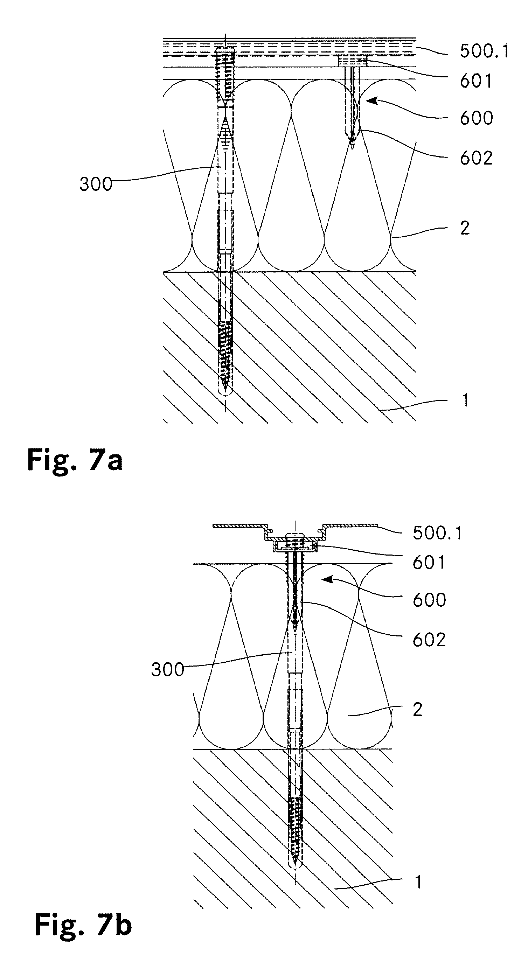

Die Figur 7a zeigt einen montierten Längsträger 500.1 an einer Aussenseite einer Isolationsschicht 2. Die Isolationsschicht 2 befindet sich an der Aussenseite einer Gebäudewand 1. Ein Nagel 600 wird vorliegend zur provisorischen Befestigung des Längsträgers 500.1 an der Aussenseite einer Isolationsschicht 2 eingesetzt, so dass anschliessend der Monteur beide Hände für die Bohrlehre respektive die Bohrmaschine frei hat. Damit kann ein einziger Monteur effizient Längsträger 500.1 montieren. Der Nagel 600 besteht aus Kunststoff und umfasst einen Kopfteil 601 und einen Stiftteil 602. Mit dem Kopfteil 601 ist der Nagel 600 mit dem Längsträger 500.1 über eine Rastverbindung verbunden. Der Stiftteil 602 des Nagels 600 steckt in der Isolationsschicht 2 und stabilisiert damit den Längsträger 500.1 provisorisch. Anschliessend wird, wie obig ausgeführt, mit Hilfe einer Bohrlehre 100 für die horizontal zu montierenden Längsträger 500.1 respektive mit Hilfe einer Bohrlehre 100.1 für vertikal zu montierende Längsträger 500.1 die Bohrungen für die Befestigungsschrauben 300 ausgeführt.

Der Längsträger 500.1 dient schliesslich dazu, Fassadenelemente oder sonstige Anbauteile an der Aussenseite der Isolation 2 zu befestigen. Im Detail werden in einem ersten Schritt die Nägel 600 mit dem Längsträger 500.1 verbunden. Anschliessend kann der Längsträger 500.1 von einer einzelnen Person an einem beliebigen Ort in der Isolationsschicht 2 eingesteckt werden. Diese einfache provisorische Vormontage des Längsträgers 500.1 vereinfacht die Montage, da die Isolationsschicht 2 nicht vorgängig bearbeitet werden muss. Ausserdem sind nicht mehrere Personen notwendig, um den Längsträger zu befestigen. Auch ist die Isolationswirkung durch die tiefe Wärmeleitfähigkeit der Nägel 600 aus Kunststoff kaum beeinträchtigt. Nach der provisorischen Fixierung des Längsträgers 500.1 erfolgt in einem weiteren Schritt eine Bohrung durch die Isolationsschicht 2 in die Gebäudewand 1. Der Längsträger 500.1 wird anschliessend definitiv mit Schrauben an der Gebäudewand 1 befestigt. Die Nägel 600 können in der Isolationsschicht 2 verbleiben. Während dem Bohren stabilisieren die Nägel 600 den Längsträger 500.1.

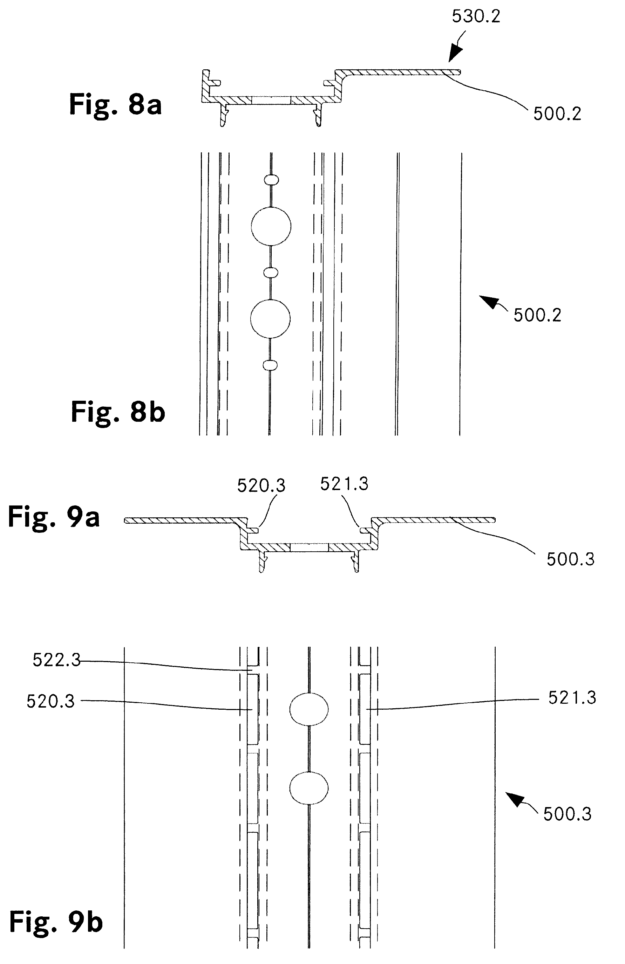

Die Figur 8a stellt eine weitere Ausführung des Längsträgers 500.2 dar. Im Unterschied zur in Figur 6d gezeigten Ausführung, hat diese Variante nur auf einer Seite eine an die U-Form anschliessende Ausdehnung 530.2 in Querrichtung. Figur 8b zeigt die Draufsicht des Längsträgers 500.2 aus Figur 8a.

Figur 9a zeigt einen Querschnitt einer weiteren Ausführungsvariante des Längsträgers 500.3. Im Unterschied zur Ausführung aus Figur 6d sind bei dieser Variante die Stege 520.3, 521.3 nicht über die gesamte Länge des Längsträgers 500.3 durchgehend. Das ist ersichtlich in der Draufsicht in Figur 9b. Die Stege 520.3, 521.3 sind in Längsrichtung in Stücke aufgeteilt, so dass sich zwischen den Stücken eine Lücke 522.3 ergibt. Diese Lücke 522.3 dient dazu, die Bohrlehre 100 in Längsrichtung des Längsträgers 500.3 formschlüssig in Position zu halten (siehe oben). Der Längsträger 500.3 hat in dieser Ausführung im Boden der U-Form keine Aussparungen für einen Stift gemäss Figur 5a - für die vorliegende Ausführungsform weist die Bohrlehre 100 seitlich eine fixe Nase auf (nicht dargestellt), welche in eine solche Lücke 522.3 einfahren und damit die Bohrlehre 100 in einer Längsrichtung des Längsträgers 500.3 fixieren kann.

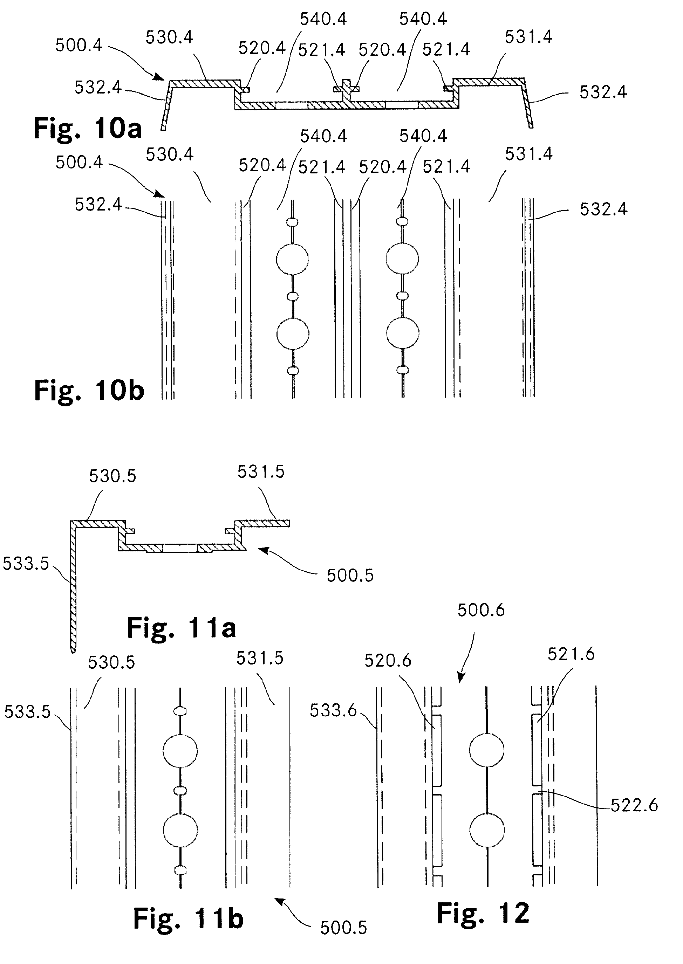

Figur 10a zeigt eine Ausführung des Längsträgers 500.4 mit zwei nebeneinander liegenden U-Formen und damit mit zwei nebeneinanderliegenden Öffnungen 540.4. Die beiden U-Formen sind in Querrichtung nebeneinander auf einer Linie angeordnet. Beide U-Formen weisen Stege 520.4, 521.4 auf. Die Position und Ausbildung der Stege 520.4, 521.4 in der U-Form ist identisch mit der Ausführung in Figur 9b. In der Mitte in Querrichtung gesehen teilen sich die beiden U-Formen einen Schenkel. Zudem sind bei dieser Ausführung die seitlichen Ausdehnungen 530.4, 531.4 in Querrichtung abgewinkelt. Das bedeutet, die Ausdehnungen 530.4, 531.4 weisen Abschnitte 532.4, 533.4 auf, die in einem Winkel von ungefähr 80° zur Hauptfläche des Längsträgers 500.4 stehen. Der gezeigte Längsträger 500.4 hat keine Aufnahmen für das Kopfteil 601 des Nagels 600, da der Längsträger 500.4 mit den abgewinkelten Abschnitte 532.4, 533.4 beispielsweise auf einer Kante, einem Dachrand oder einem Rahmen positioniert werden kann. Der Nagel 600 kann in dieser Ausführungsform des Längsträgers 500.4 auch mit dem Stiftteil 602 voran durch eine Öffnung 540.4 geführt werden, so dass der Kopfteil 601 des Nagels 600 bei den Stegen 520.4, 521.4 einrastet (dies gilt gleichermassen auch für die Ausführungsform gemäss Figur 10 und 11). In einer nicht abgebildeten Ausführung kann der Längsträger 500.4 jedoch auch eine Aufnahme zur Befestigung des Kopfteils 601 des Nagels auf der den Stegen 520.4, 521.4 gegenüberliegenden Seite aufweisen. Figur 10b zeigt eine Draufsicht des Längsträgers 500.4 aus Figur 10a.

Durch die beiden U-Formen mit den Stegen 520.4, 521.4 kann der Längsträger auf parallelen Bahnen an der Aussenseite einer Isolationsschicht befestigt werden, so dass eine besonders stabile Montage erreicht wird.

Figur 11a zeigt eine Ausführung des Längsträgers 500.5, wobei die seitlichen Ausdehnungen 530.5, 531.5 in Querrichtung nur etwa halb so lang sind wie die der in Figur 6b gezeigten Ausführung. Zudem weist eine Ausdehnung 530.5 einen im rechten Winkel zur Hauptfläche stehenden Abschnitt 533.5 auf. Dieser Abschnitt 533.5 ist auf der Seite der Hauptfläche abstehend und verläuft über die gesamte Länge des Längsträgers 500.5. Figur 12 unterscheidet sich von der Figur 11b lediglich durch die unterbrochenen Stege.

Der abgewinkelte Abschnitt 533.5 oder 533.6 ermöglicht ein einfaches Positionieren des Längsträgers 500.5 oder 500.6 beispielsweise an einer Kante oder einem Dachrand. In einer nicht abgebildeten Variante weist der Längsträger 500.5 eine Aufnahme zur Befestigung des Kopfteils 601 des Nagels 600 auf.

Figur 12 zeigt einen Längsträger 500.6, der denselben Querschnitt wie der in Figur 11a gezeigte Längsträger 500.5 aufweist. Jedoch sind beim Längsträger 500.6 die Stege 520.6, 521.6 in Längsrichtung des Längsträgers 500.6 unterbrochen, so dass Lücken 522.6 entstehen um die Bohrlehre 100 formschlüssig in Längsrichtung zu halten.

Zusammenfassend ist festzustellen, dass erfindungsgemäss eine Bohrlehre bereitgestellt wird, womit besonders effizient Längsprofile respektive Längsträger an einer isolierten Fassade montiert werden können.

## Patentansprüche

1. System umfassend eine Bohrlehre (100) mit mindestens einem Durchgang (130, 131) zur Führung eines Werkzeugs und einen Längsträger (500.1) zur Montage an einer Aussenseite einer Isolationsschicht (2), wobei die Bohrlehre (100) zur Ausführung einer Bohrung an dem Längsträger (500.1) befestigbar ist und wobei die Bohrlehre (100) über eine erste Haltevorrichtung (110) in einer ersten Richtung am Längsträger (500.1) fixierbar ist, **dadurch gekennzeichnet, dass** die Bohrlehre (100) über eine zweite Haltevorrichtung (120) in einer zweiten, zur ersten Richtung unterschiedlichen Richtung am Längsträger (500.1) fixierbar ist.

2. System nach Anspruch 1, **dadurch gekennzeichnet, dass** die Bohrlehre (100) über die erste Haltevorrichtung (110) in einer ersten Ebene fixierbar ist und dass die Bohrlehre (100) über die zweite Haltevorrichtung (120) in einer ausserhalb der ersten Ebene liegenden, zweiten Richtung fixierbar ist, um eine räumliche Fixierung der Bohrlehre (100) bezüglich des Längsträgers (500.1) zu erreichen.

3. System nach Anspruch 1 oder 2, **dadurch gekennzeichnet, dass** die erste Haltevorrichtung (110) ein erstes Schliesselement (114) zum Hintergreifen eines ersten Bereichs des Längsträgers (500.1) umfasst, womit die Bohrlehre (100) in der ersten Ebene fixierbar ist und wobei die erste Ebene rechtwinklig zu einer Hauptfläche des Längsträgers (500.1) liegt.

4. System nach Anspruch 3, **dadurch gekennzeichnet, dass** der erste Bereich des Längsträgers (500.1) als Nutschiene ausgebildet ist.

5. System nach Anspruch 3 oder 4, **dadurch gekennzeichnet, dass** das erste Schliesselement (114) von einer Schliessstellung, in welcher das Schliesselement (114) den ersten Bereich hintergreift, in eine Offenstellung überführbar ist, in welcher das Schliesselement (114) den ersten Bereich nicht hintergreift.

6. System nach Anspruch 5, **dadurch gekennzeichnet, dass** das erste Schliesselement (114) entgegen einer Rückstellkraft von der Schliessstellung in die Offenstellung überführbar ist.

7. System nach einem der Ansprüche 1 bis 6, **dadurch gekennzeichnet, dass** die erste Haltevorrichtung (110) ein zweites Schliesselement (114) umfasst, welches entgegen einer Rückstellkraft von einer Schliessstellung in eine Offenstellung überführbar ist.

8. System nach Anspruch 7, **dadurch gekennzeichnet, dass** die Bohrlehre (100) einen Grundkörper (101) mit zwei gegenüberliegenden Betätigungselementen (111) zum Betätigen des ersten und des zweiten Schliesselements (114) aufweist.

9. System nach einem der Ansprüche 1 bis 8, **dadurch gekennzeichnet, dass** die zweite Haltevorrichtung (120) einen Vorsprung (120) an der Bohrlehre (100) und eine Vertiefung (542.1) am Längsträger (500.1) umfasst, wobei bei in den Längsträger (500.1) eingerasteter Bohrlehre (100) der Vorsprung (120) in die Vertiefung (542.1) eingreift und so die eingerastete Bohrlehre (100) in der zweiten, zur ersten Richtung unterschiedlichen Richtung, fixiert.

10. System nach Anspruch 9, **dadurch gekennzeichnet, dass** der Vorsprung als Zapfen (120) und die Vertiefung (542.1) als Positionieröffnung ausgebildet sind.

11. Bohrlehre (100) zur Verwendung in einem System nach einem der Ansprüche 1 bis 10, umfassend einen Grundkörper (101) mit mindestens einem Durchgang (130, 131) zur Führung eines Werkzeugs, **dadurch gekennzeichnet, dass** der Grundkörper (101) weiter einen Zapfen (120) zum Einführen in eine Positionieröffnung eines Längsträgers (500.1) umfasst.

12. Bohrlehre (100) nach Anspruch 11, **dadurch gekennzeichnet, dass** der Grundkörper einen zweiten Durchgang (131) aufweist, wobei der erste Durchgang (130) und der zweite Durchgang (131) einen spitzen Zwischenwinkel einnehmen.

13. Bohrlehre (100) nach Anspruch 11 oder 12, **dadurch gekennzeichnet, dass** der Zwischenwinkel in einem Bereich von 5° bis 60°, vorzugsweise in einem Bereich von 10° bis 40° liegt.

14. Längsträger (500.1) zur Verwendung in einem System nach einem der Ansprüche 1 bis 10, umfassend eine Nutschiene zur Aufnahme einer Bohrlehre (100), **dadurch gekennzeichnet, dass** der Längsträger (500.1) weiter eine erste Bohröffnung (541.1) für das Durchführen eines Werkzeugs, insbesondere eines Bohrers, sowie eine Positionieröffnung (542.1) zur Aufnahme eines Zapfens einer Bohrlehre (100) umfasst.

15. Längsträger (500.1) nach Anspruch 14, **dadurch gekennzeichnet, dass** die Bohröffnung (541.1) und die Positionieröffnung (542.1) in der Nutschiene bezüglich einer Längsrichtung des Längsträgers (500.1) hintereinander angeordnet sind.

16. Längsträger (500.1) nach Anspruch 14 oder 15, **dadurch gekennzeichnet, dass** er in der Nutschiene in der Längsrichtung hintereinander zwei Bohröffnungen (541.1) zum Durchführen eines Werkzeugs aufweist, welche jeweils beidseitig in Längsrichtung zu einer Positionieröffnung (542.1) zur Aufnahme eines Zapfens einer Bohrlehre (100) benachbart sind.

17. Verfahren zur Montage eines Längsträgers (500.1) an der Aussenseite einer Isolationsschicht (2), unter Verwendung eines Systems nach einem der Ansprüche 1 bis 10, wobei die folgenden Schritte ausgeführt werden:
a. Provisorische Befestigung des Längsträgers (500.1) an der Aussenseite der Isolationsschicht (2);
b. Formschlüssiges Befestigen der Bohrlehre (100) am Längsträger (500.1);
c. Bohren einer Bohrung mithilfe der Bohrlehre (100).

18. Verfahren nach Anspruch 16, **dadurch gekennzeichnet, dass** für die provisorische Befestigung ein stiftartiges Befestigungsmittel (600) mit dem Längsträger (500.1) verbunden wird, über welches der Längsträger (500.1) an der Aussenseite der Isolationsschicht provisorisch befestigt wird.
